# EUROPEAN PATENT SPECIFICATION

(11) **EP 1 244 505 B1**
(45) Date of publication and mention of the grant of the patent: **14.09.2005**
(21) Application number: 99963827.3
(22) Date of filing: 20.12.1999
(51) Int. Cl.: B01D 3/00, B01D 47/14, B01D 53/18, B01J 19/32, F28F 25/08

(54) **LIQUID DISTRIBUTION IN A CONTACT DEVICE**
FLÜSSIGKEITSVERTEILUNG IN EINER KONTAKTVORRICHTUNG
DISTRIBUTION DE LIQUIDE DANS UN DISPOSITIF DE CONTACT

(43) Date of publication of application: 02.10.2002
(73) Proprietor: ABB FLÄKT AKTIEBOLAG, 120 86 Stockholm (SE)
(72) Inventor: KALTIN, Lars, S-352 40 Växjö (SE); BJARN , Odd, E., N-0984 Oslo (NO)
(74) Representative: Berglund, Stefan
(86) International application number: PCT/SE1999/002426
(87) International publication number: WO 2001/045817

(56) References cited:
- EP-A2- 0 803 277
- SE-C2- 512 546
- US-A- 5 139 544

## Description

The present invention relates to contact device, comprising a structured packing placed between an inlet, located at the lower part of the contact device, for an upwardly-directed gas flow, and an outlet at the upper part thereof, for discharging the treated gas flow, as well as an inlet at the upper part of the contact device, for a downwardly-directed liquid flow, and an outlet at the lower part thereof, for discharging the treated liquid flow, whereby a liquid distributor is arranged at the above-mentioned inlet for the liquid flow.

From US 5139544, a contact device of the kind described above is previously known, which comprises a structured packing with a plurality of differently oriented packing layers, where liquid is introduced directly from a liquid distributor, which is arranged at the top of the structured packing, into an upwardly directed flow passage of an upper packing layer, for achieving contact between gas and liquid within the upper packing layer and reducing the risk of formation of drops.

The previously known liquid distributor distributes liquid from the liquid inlet to an upper packing layer of a structured packing. The structured packing shows a plurality of plates or lamellas, which form upwardly directed flow channels through the packing. A plurality of parallel liquid distributors are arranged across the diameter of the contact device. Each one of the liquid distributors shows a channel, with a plane bottom surface, provided with liquid distribution holes arranged aligned with the flow channels of the packing, to distribute liquid directly on the upper surface of the packing layer and into the flow passage of the structured packing. The liquid distributor rests directly on the upper surface of the packing layer and blocks part of the mentioned upper surface, such that the upwardly directed gas flow is conducted towards each side of the liquid distributor and through a drop separator.

If the liquid distribution in the packing of a contact device is uniform, but the distribution of the gas is non-uniform, or vice versa, there is a great risk of a poor distribution within the packing, which may lead to the formation of different paths of gas or liquid through the contact device. This results in a lower contact between gas and liquid than what could be expected.

According to the prior art, absorption liquid is introduced from above through a plurality of distribution channels located directly on the upper surface of the packing, that is, the channels rest on the packing. Usually, liquid is introduced through holes in the bottom of the channels and hence hit the upper surface of the packing. The kinetic energy of the jets of liquid, together with the structure of the packing, will unavoidably result in splash with a formation of drops in the area in and above the packing. Drops formed by such splashing will be carried along by the gas flow, and cause problems downstream of the packing. For this reason, it has been considered necessary to use a drop separator placed downstream of the packing. A disadvantage of such a drop separator is that the investment cost and the operating cost of the contact device increase.

The object of the present invention is to improve the distribution of gas and liquid within the packing, and to prevent formation of liquid drops or, if liquid drops exists, to prevent such drops from being carried away by the gas flow, thus excluding the use of a drop separator.

This object is achieved according to the invention with a device of the kind described in the introductory part of this description, which is characterised in that the liquid distributor comprises at least one nozzle, which projects into a flow channel of the packing and that the nozzle is designed to achieve an essentially total blocking of the gas flow in said flow channel.

By forming the channels of the liquid distributor, in accordance with the present invention, such that these show a structure, which fits into the packing, liquid may be injected into the packing instead of being ejected onto the packing. Those parts of the channels of the liquid distributor, which fit, into the packing are designed so as to achieve a total blocking of the gas in the area of injection. Thereby, the risk of splash or drop formation, when the liquid is introduced into the packing, is reduced. At the same time, essentially no gas will flow in the area from the outlet of the liquid distributor to the point where the liquid hits the packing. In addition, because of this, no liquid drops, which may possibly form in the above-mentioned area, will be carried away by the gas flow.

The liquid distributor according to the invention is suitably designed in such a way that it fits into structured packing of arbitrary kind, by using the "male/female principle". This enables a liquid injection into the packing and achieves a blocking of the gas in the area where the liquid flow flows from the liquid distributor until the liquid hits the surface of the packing. The design of the liquid distributor is dependent on and adapted to the specific packing and thus shows, within the scope of the present invention, an arbitrarily chosen shape.

The invention will now be described in detail with reference to the accompanying drawing, wherein;
Figure 1 shows a schematic cross-section view of a contact device according to the present invention.
Figure 2 shows a detailed view from above of a liquid distributor.
Figure 3 shows part of a cross-section view through the liquid distributor shown in Figure 2.
Figure 4 shows a side view of a nozzle for the liquid distributor.
Figure 5 shows a view from above of the nozzle according to figure 4.

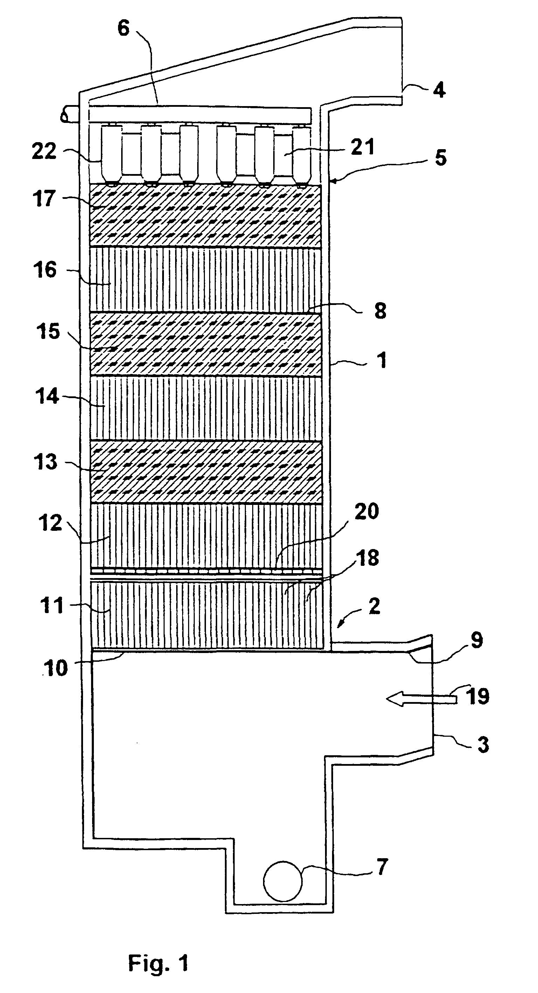

In the drawings, Figure 1 shows an essentially vertically arranged contact device 1, comprising an inlet 3, arranged at the lower part 2 of the contact device, essentially perpendicular to the contact device 1, for a gas flow directed upwards through the contact device 1, and an outlet 4 at the upper part 5 thereof, for discharging the treated gas flow, as well as an inlet 6 at the upper part 5 of the contact device, for a liquid flow directed downwards through the contact device 1, and an outlet 7 at the lower part 2 thereof, for discharging the treated liquid flow. The expression contact device comprises, for example, a tower, a column or a scrubber for absorption, adsorption, desorption or distillation, etc.

The contact device 1 comprises at least one structured packing 8, which is placed between the inlet 3 and the outlet 4. An upper edge 9 of the inlet 3 for the gas flow opens out substantially on a level with the lower limiting surface 10 of the structured packing 8. In a known manner, the structured packing 8 may be formed from two corrugated plates or the like, arranged against each other, which between them form a number of flow channels 18. The packing 8 suitably comprises a plurality of packing layers 11-17, of which at least the lowermost packing layer 11 is arranged in such a way that its flow channels 18 through the packing layer 11 extend upwards in a plane arranged essentially perpendicular to the direction of flow 19 of the incoming gas flow. The plates in two adjacent upper packing layers 12-17 are suitably arranged perpendicular to each other, such that the gas flow is conducted upwards through the contact device 1 in a plane located alternately parallel and perpendicular, respectively, to the direction of flow 19 of the incoming gas.

The lowermost packing layer 11 is supported essentially freely below a supporting lattice 20, which is located within the structured packing 8. The two lowermost packing layers 11-12 are arranged in a similar manner, that is, with the respective flow channels 18 located in a common plane.

Above the uppermost packing layer 17, at least one liquid distributor 21 is arranged, which is provided with liquid from the inlet 6. The drawing shows two liquid distributors 21, each having three distribution channels 22, but the number of liquid distributors 21, the number of distribution channels 22 and their respective design may, of course, be varied within the scope of the appended claims.

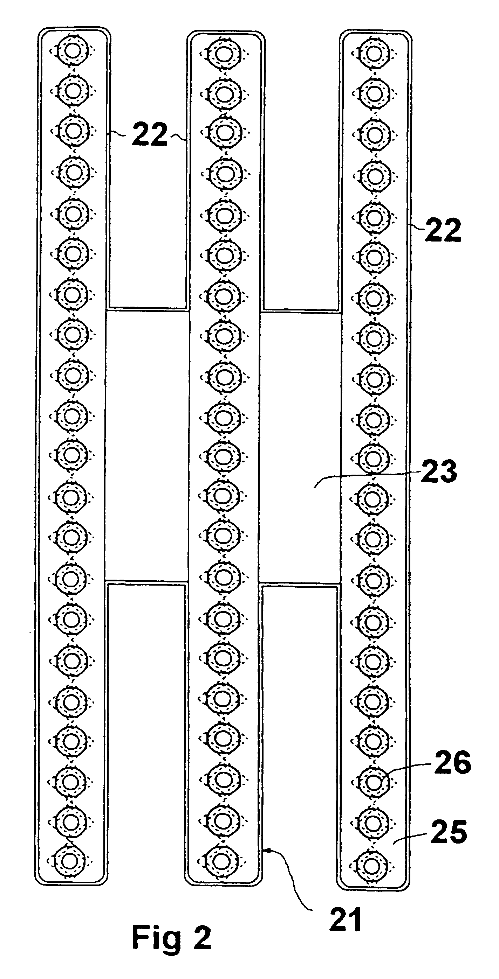

Figures 2-5 show parts of a liquid distributor 21, comprising three liquid distribution channels 22 and a common inlet channel 23, with a bottom 24. The inlet channel 23 spreads the liquid in each direction into the liquid distribution channels 22. At the bottom 25 of the liquid distribution channels 22 there are a number of holes with nozzles 26, which are intended to project into the uppermost packing layer 17 of the structured packing 8 in Figure 1.

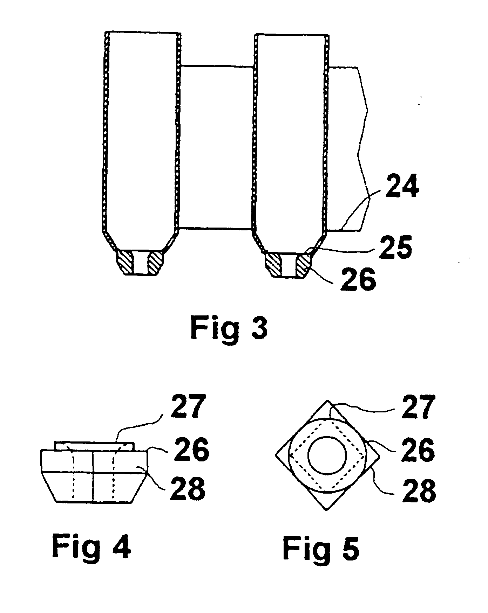

The nozzles 26 have an outer shape, which fit into the packing. In the example shown in Figures 4 and 5, the nozzle 26 has an essentially cylindrical upper part 27, which is intended to project through a circular hole in the bottom 25 of the liquid distribution channel, and an essentially rectangular lower part 28, which is intended to be placed tightly between two corrugated plates (not shown) bearing against each other, which form the actual packing. In case of a different shape of a structured packing, the nozzles 26, of course, have a different shape. To facilitate the adaptation to different packings, the whole of, or parts of, the nozzles 26 may be detachably fixed to the bottom of the channel.

By the present embodiment of the nozzles 26, liquid may be injected into the packing instead of being ejected onto the packing. Those parts of the nozzles 26, which fit into the packing, are designed to achieve a total blocking of the gas in the area of injection. In this way, splash or drop formation, when the liquid is introduced into the packing, will be avoided. Consequently, no significant gas flow will occur in the area from the outlet of the liquid distributor to the point where the liquid hits the packing, and hence no internal drops will be carried away by the gas flow.

With the present invention, a uniform gas distribution through the packing layer and injection of liquid inside the packing are achieved, the risk of drops being carried along is reduced, and it is possible to drive the process without any drop separator. This is made possible since the packing as such operates as a drop separator.

## Claims

1. A contact device (1) comprising a structured packing (8) placed between an inlet (3), located at the lower part (2) of the device, for an upwardly directed gas flow, and an outlet (4) at the upper part (5) thereof, for discharging the treated gas flow, as well as an inlet (6) at the upper part (5) of the device, for a downwardly directed liquid flow, and an outlet (7) at the lower part (2) thereof, for discharging the treated liquid flow, at least one liquid distributor (21) being arranged at said inlet (6) for the liquid flow, **characterised in that** the liquid distributor (21) comprises at least one nozzle (26) which projects into a flow channel (18) of the packing (8) and that the nozzle (26) is designed so as to achieve an essentially total blocking of the gas flow in said flow channel (18).

2. A device according to claim 1, **characterised in that** at least part of the nozzle (26) is detachably fixed to the liquid distributor (21).

3. A device according to claim 2, **characterised in that** said par has an arbitrary shape adapted to a flow channel (18) of the packing (8).

## Patentansprüche

1. Kontaktvorrichtung (1), die eine strukturierte Packung (8), die zwischen einem Einlass (3), der für einen nach oben gerichteten Gasstrom am unteren Teil (2) der Vorrichtung angeordnet ist, und einem Auslass (4) an ihrem oberen Teil (5) zum Ablassen des behandelten Gasstroms platziert ist, sowie einen Einlass (6) am oberen Teil (5) der Vorrichtung für einen nach unten gerichteten Flüssigkeitsstrom und einen Auslass (7) an ihrem unteren Teil (2) zum Ablassen des behandelten Flüssigkeitsstroms aufweist, wobei mindestens ein Flüssigkeitsverteiler (21) am Einlass (6) für den Flüssigkeitsstrom angeordnet ist, **dadurch gekennzeichnet, dass** der Flüssigkeitsverteiler (21) mindestens eine Düse (26) aufweist, die in einen Strömungskanal (18) der Packung (8) hineinragt, und dass die Düse (26) so ausgelegt ist, dass eine im Wesentlichen vollkommene Blockierung des Gasstroms im Strömungskanal (18) erreicht wird.

2. Vorrichtung nach Anspruch 1, **dadurch gekennzeichnet, dass** mindestens ein Teil der Düse (26) entfernbar am Flüssigkeitsverteiler (21) befestigt ist.

3. Vorrichtung nach Anspruch 2, **dadurch gekennzeichnet, dass** dieser Teil eine beliebige Gestalt hat, die an einen Strömungskanal (18) der Packung (8) angepasst ist.

## Revendications

1. Dispositif de contact (1) comprenant une garniture structurée (8) placée entre une entrée (3), située à la partie inférieure (2) du dispositif, pour un écoulement de gaz dirigé vers le haut, et une sortie (4) à la partie supérieure (5) de celui-ci, pour décharger l'écoulement de gaz traité, ainsi qu'une entrée (6) à la partie supérieure (5) du dispositif, pour un écoulement de liquide dirigé vers le bas, et une sortie (7) à la partie inférieure (2) de celui-ci, pour décharger l'écoulement de liquide traité, au moins un distributeur de liquide (21) étant disposé à ladite entrée (6) pour l'écoulement de liquide, **caractérisé en ce que** le distributeur de liquide (21) comprend au moins une tuyère (26) saillant dans un canal d'écoulement (18) de la garniture (8), et **en ce que** la tuyère (26) est conçue de manière à réaliser un blocage sensiblement total de l'écoulement de gaz dans ledit canal d'écoulement (18).

2. Dispositif selon la revendication 1, **caractérisé en ce qu'**au moins une partie de la tuyère (26) est fixée d'une façon détachable au distributeur de liquide (21).

3. Dispositif selon la revendication 2, **caractérisé en ce que** ladite partie présente une forme arbitraire adaptée à un canal d'écoulement (18) de la garniture (8).
